# EUROPÄISCHE PATENTANMELDUNG

(11) **EP 2 258 586 A1**
(43) Veröffentlichungstag der Anmeldung: **08.12.2010**
(21) Anmeldenummer: 10005789.2
(22) Anmeldetag: 04.06.2010
(51) Int. Cl.: B60P 1/04, B62D 49/00, B62D 53/08

(54) **Sattelzug**

(30) Priorität: 06.06.2009 DE 102009024107
(71) Anmelder: Bermes, Manfred, 55286 Wörrstadt (DE); Weiss, Klaus-Dieter, 35599 Gau-Bickelheim (DE)
(72) Erfinder: Bermes, Manfred, 55286 Wörrstadt (DE); Weiss, Klaus-Dieter, 35599 Gau-Bickelheim (DE)
(74) Vertreter: Becker, Bernd

(57) **Zusammenfassung**

Ein Sattelzug umfasst eine Zugmaschine (1) und einen Auflieger (7), die über eine Kupplung (8) miteinander verbunden sind. An dem Heck der Zugmaschine (1) ist eine mittels Sensorsignalen gesteuerte Distanzeinrichtung (16) befestigt, die zwischen dem Auflieger (7) und der Zugmaschine (1) in Richtung einer senkrecht zur Längsachse der Zugmaschine (1) verlaufenden Hochachse wirkt.

## Beschreibung

Die Erfindung bezieht sich auf einen Sattelzug mit einer Zugmaschine und einem Auflieger, die über eine Kupplung miteinander verbunden sind, ein Verfahren zur Belastung einer hinteren Antriebsachse einer luftgefederten Zugmaschine eines Sattelzugs, die über eine Kupplung mit einem als Kipper ausgestalteten Auflieger verbunden ist, und ein Verfahren zur Belastung einer hinteren Antriebsachse einer Zugmaschine eines Sattelzugs, die über eine Kupplung mit einem als Kipper ausgestalteten Auflieger verbunden ist.

Üblicherweise umfasst eine Zugmaschine eines Sattelzuges eine lenkbare Vorderachse und mindestens eine angetriebene Hinterachse, die an einem Trägerrahmen der Zugmaschine gelagert sind. Der Trägerrahmen dient im Weiteren zur Befestigung einer Sattelplatte, die mit einem am Chassis eines Aufliegers festgelegten Königszapfen zusammenwirkt. Auflieger sind an ihrem heckseitigen Ende in der Regel mit zwei Achsen ausgestattet. Es sind aus der Praxis Auflieger bekannt, die Kipper oder auch Ladevorrichtungen für Container- bzw. Mulden als Aufbauten aufweisen. Beim Be- und/oder Entladen dieser Aufbauten kann eine derartige heckseitige Belastung auftreten, dass der Auflieger um seine Achsen verschwenkt und dabei über die aus Sattelplatte und Königszapfen bestehende Kupplung ein Drehmoment auf die Zugmaschine ausübt, das zu einem Abheben dessen Hinterachse von dem Untergrund, beispielsweise einer Straße, führt. Soll der Sattelzug bei einem solchen Be- und/oder Entladen nicht bewegt werden, ist die Situation relativ unproblematisch, da dann aus dem Stand der Technik bekannte Stützen, insbesondere des Aufliegers, auf den Untergrund gelassen werden, die ein Verschwenken der Zugmaschine und/oder des Aufliegers verhindern. Problematisch stellt sich die Situation eines derartigen Be- und/oder Entladens dar, wenn der Sattelzug verfahren muss, beispielsweise um abzukippende Erde zu verteilen oder wenn der Untergrund nicht tragfähig ist. Beim Verteilen von Erde oder dergleichen Schüttgütern wird oftmals ein weiteres Zugfahrzeug vor das Zugfahrzeug des Sattelzuges gespannt, das den aufgrund der vom Untergrund abgehobenen Antriebsachse bewegungsunfähigen Sattelzug schleppt, was mit einem erheblichen Aufwand verbunden ist, weil ein zweites Zugfahrzeug bereitgestellt werden muss und das An- und Abspannen relativ viel Zeit beansprucht.

Es ist Aufgabe der Erfindung, einen Sattelzug und Verfahren der eingangs genannten Art zu schaffen, bei dem bzw. denen die zuvor genannten Nachteile vermieden sind.

Erfindungsgemäß wird die Aufgabe bei einem Sattelzug dadurch gelöst, dass an dem Heck der Zugmaschine eine mittels Sensorsignalen gesteuerte Distanzeinrichtung angeordnet ist, die zwischen dem Auflieger und der Zugmaschine in Richtung einer senkrecht zur Längsachse der Zugmaschine verlaufenden Hochachse wirkt.

Die Distanzeinrichtung ist im einfachsten Fall starr aufgebaut und verhindert, insbesondere bei einem Be- und/oder Entladen des Aufliegers, eine derartige Beanspruchung des Zugfahrzeuges über die aus Sattelplatte und Königszapfen bestehende Kupplung, dass dessen heckseitige Antriebsachse aufgrund eines entsprechend wirkenden Drehmomentes von einem Untergrund abhebt und der Sattelzug nicht fahrbar ist. Da das Heck des Zugfahrzeuges bei vorhandener Distanzeinrichtung beim Be- und/oder Entladen des Aufliegers gegenüber dem Auflieger im Wesentliche die gleiche Lage wie im normalen Fahrbetrieb behält, bleibt die heckseitige Antriebsachse des Zugfahrzeuges in stetem Kontakt mit dem Untergrund. Nach dem Be- und/oder Entladen des Aufliegers wird die Distanzeinrichtung entfernt bzw. unwirksam gemacht, was beispielsweise durch eine Höhenveränderung der nach dem Prinzip eines Scherenwagenhebers ausgebildeten Distanzeinrichtung, die auch an dem Zugfahrzeug oder dem Auflieger befestigt sein kann, erfolgt. Die Distanzeinrichtung kann beispielsweise verursacht durch Signale üblicherweise in einem Kraftfahrzeug vorhandener Sensoren in einen Bereich zwischen den Zugfahrzeug und dem Auflieger geschwenkt werden oder die in diesem Bereich angeordnete Distanzeinrichtung wird derart beaufschlagt, dass sie eine entsprechende Wirkung entfaltet. Die Sensorik kann beispielsweise entsprechende Lagen bzw. Lageänderungen des Zugfahrzeugs und/oder des Aufliegers erfassen und insbesondere gemeinsam mit Werten des Schlupfes der Räder und/oder einer Geschwindigkeit die Distanzeinrichtung, vorzugsweise mittels entsprechender Aktuatoren, wirksam werden lassen. Zur Überbrückung verhältnismäßig großer Abstände ist zweckmäßigerweise die Distanzeinrichtung teleskopierbar, insbesondere als Zylinder-Kolbeneinheit, ausgebildet.

In Ausgestaltung ist die Distanzeinrichtung hydraulisch oder pneumatisch betätigbar und an den Hydraulikkreislauf oder einen Druckluftkessel der Zugmaschine angeschlossen. Über die Hydraulik lassen sich mittels bekannter Zylinder-Kolbeneinheiten große Kräfte übertragen. Die Ansteuerung kann beispielsweise mittels eines Schalters in oder an einer Fahrerkabine erfolgen oder mit einer Hydraulikeinheit, die einem entsprechenden Aufbau des Aufliegers zugeordnet ist, so dass vorzugsweise gleichzeitig mit dem Einleiten des Be- und/oder Entladens des Aufliegers die Distanzeinrichtung wirksam bzw. unwirksam wird.

Nach einer Weiterbildung sind Signale von Radsensoren und/oder Lagesensoren der Zugmaschine und/oder des Aufliegers verwendbar. Beispielsweise können Radsensoren des Zugfahrzeuges einen großen Schlupf an den Rädern der Antriebsachse feststellen, wobei gleichzeitig eine Geschwindigkeitserfassung eine Ist-Geschwindigkeit unter einem bestimmten Schwellwert registriert und ein dem Auflieger zugeordneter Sensor ein Be- und/oder Entladen des Aufliegers signalisiert. Liegen sämtliche Informationen vor, ist es möglich, die Distanzeinrichtung derart zu teleskopieren, dass der Schlupf der Räder der Antriebsachse einen vorgegebenen Wert nicht überschreitet. Im Weiteren kann bei einer entsprechenden Signalisierung die Distanzeinrichtung in eine eingefahrene Endlage verfahren werden und der Sattelzug befindet sich sonach in einem normalen Fahrbetrieb, ohne dass ein Fahrer der Zugmaschine steuernd eingreifen muss.

Zweckmäßigerweise sind die Distanzeinrichtung und die Sensoren an eine Steuerung der Zugmaschine angeschlossen. Die Steuergeräte der Steuerung der Zugmaschine verfügen über entsprechende Informationen, die auf dem Fahrzeug-Bus vorliegen, und die Kapazitäten erlauben in der Regel die Ansteuerung eines Anbaugerätes, wie der Distanzeinrichtung, ohne besonderen Aufwand.

Zur Erzielung einer gleichmäßigen Stabilisierung und Lastverteilung sind an einem Trägerrahmen der Zugmaschine zwei zueinander beabstandete Distanzeinrichtungen festgelegt.

Bevorzugt weist der Auflieger einen als Kipper ausgebildeten Aufbau auf und die Distanzeinrichtung wirkt zwischen dem Auflieger und der Zugmaschine zumindest beim heckseitigen Entladen, wenn wenigstens eine Antriebsachse der Zugmaschine vom Untergrund abgehoben ist.

Um einen sicheren und ungestörten Fahrbetrieb zu ermöglichen, fährt die Distanzeinrichtung ab einer bestimmten Geschwindigkeit in ihre Ausgangslage, in der sie nicht zwischen der Zugmaschine und dem Auflieger wirksam ist, zusammen.

Die Aufgabe wird bei einem Verfahren zur Belastung einer hinteren Antriebsachse einer luftgefederten Zugmaschine eines Sattelzugs, die über eine Kupplung mit einem als Kipper ausgestalteten Auflieger verbunden ist, dadurch gelöst, dass Sensorsignale erfasst werden, die Luft aus der Federung der Antriebsachse abgelassen, eine Distanzeinrichtung an dem Heck der Zugmaschine zwischen dem Auflieger und der Zugmaschine angeordnet, Luft in die Federung gepumpt und anschließend der Kipper zum Entladen betätigt wird.

Durch das Ablassen von Luft aus der Federung der Zugmaschine im Bereich einer heckseitigen Antriebsachse vergrößert sich der Freiraum zwischen dem Heck der Zugmaschine und dem darüber ragenden Auflieger. In diesen Freiraum wird die Distanzeinrichtung eingesetzt bzw. eingeschwenkt, die beispielsweise ein einfacher Klotz oder ein Scherenwagenheber mit einer Höhe, die in etwa der Höhe des Freiraums entspricht, sein kann. Anschließend wird Luft in die entsprechenden Federn gepumpt und die Distanzeinrichtung wird zwischen der Zugmaschine und dem Auflieger eingeklemmt. Beim anschließenden Verschwenken des Kippers zum Entladen des Aufliegers wirken derartige Momente auf die hinteren Antriebsachsen der Zugmaschine, dass deren Belastung erfolgt und der Sattelzug fahrbar ist.

Alternativ wird die Aufgabe bei einem Verfahren zur Belastung einer hinteren Antriebsachse einer Zugmaschine eines Sattelzugs, die über eine Kupplung mit einem als Kipper ausgestalteten Auflieger verbunden ist, dadurch gelöst, dass vor oder während der Betätigung des Kippers zum Entladen Sensorsignale erfasst werden und eine am Heck der Zugmaschine zwischen der Zugmaschine und dem Auflieger wirkende Distanzeinrichtung derart druckbeaufschlagt wird, dass die Zugmaschine relativ zu dem Auflieger nach unten gedrückt wird.

Die beispielsweise eine telskopierbare Kolben-ZylinderEinheit umfassende Distanzeinrichtung wird aufgrund der erfassten Sensorsignale betätigt, um beim Verschwenken des Kippers eine Belastung der hinteren Antriebsachse zu erzielen, indem der Zylinder aus dem Kolben ausgefahren wird, um zwischen der Zugmaschine und dem Auflieger zu wirken.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

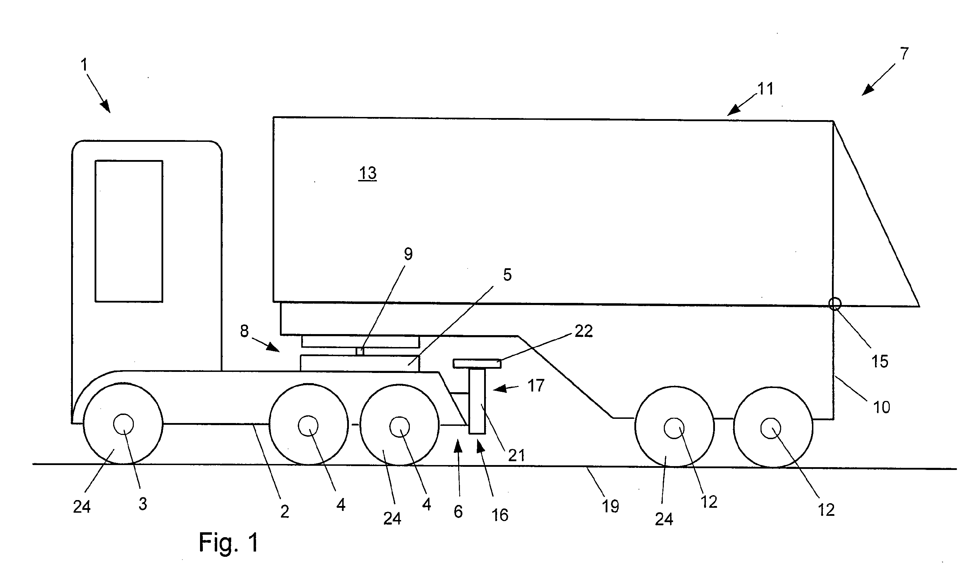

- Fig.1: eine Seitenansicht eines erfindungsgemäßen Sattel- zuges mit einem Auflieger, der einen als Kipper ausgebildeten Aufbau in einer Ausgangsstellung auf- weist,

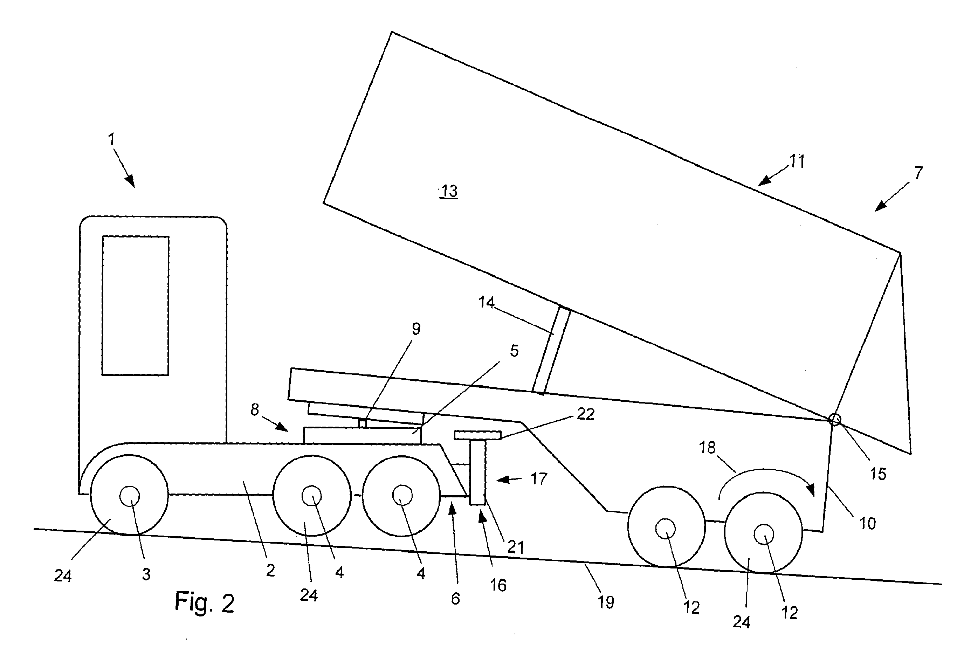

- Fig.2: eine Seitenansicht des Sattelzuges nach Fig. 1 mit dem Kipper in einer Entladestellung und

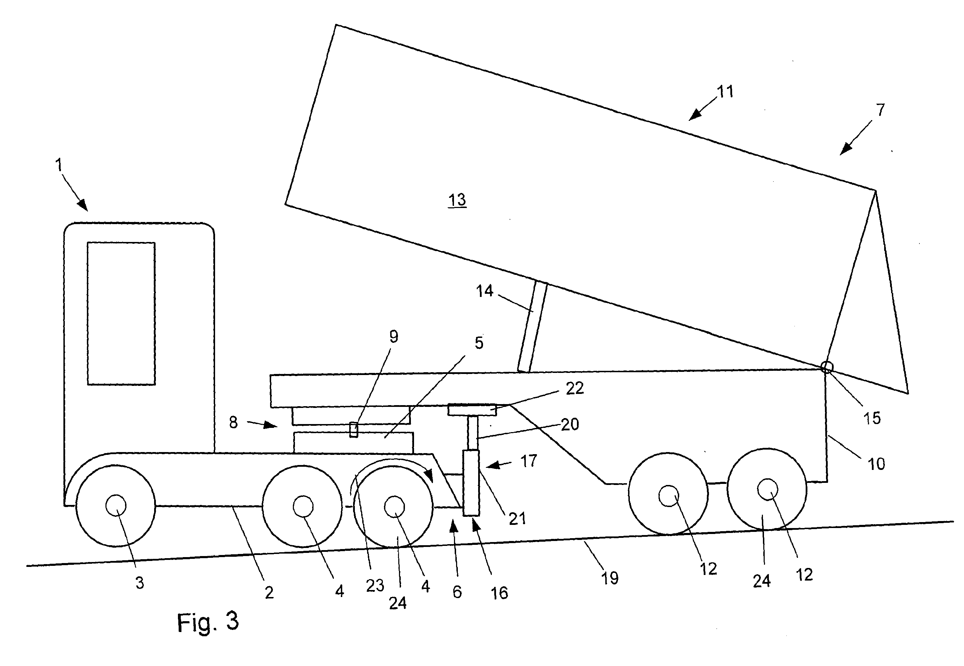

- Fig.3: eine weitere Seitenansicht des Sattelzuges nach Fig. 2.

Der Sattelzug umfasst eine Zugmaschine 1 mit einer an einem Trägerrahmen 2 gelagerten lenkbaren Vorderachse 3 und zwei hinteren Antriebsachsen 4, wobei an dem Trägerrahmen 2 oberhalb der Antriebsachsen 4 eine Sattelplatte 5 und heckseitig hinter den Antriebsachsen 4 ein Überstand 6 vorhanden ist. Zur Ausbildung einer zwischen der Zugmaschine 1 und dem Auflieger 7 wirkenden Kupplung 8 ist ein Königszapfen 9 an einem Chassis 10 des Aufliegers 7 befestigt, der einen als Kipper 11 ausgebildeten Aufbau aufweist. Der Auflieger 7 ist mit zwei heckseitigen Achsen 12 versehen. Im Weiteren ist eine Mulde 13 zum Entladen des Kippers 11 mittels eines zwischen dem Chassis 10 des Aufliegers 7 und der Mulde 13 befestigten Hydraulikzylinders 14 um ein heckseitiges Lager 15 verschwenkbar.

An dem Überstand 6 der Zugmaschine 1 sind zwei zueinander beabstandete Distanzeinrichtungen 16 festgelegt, die als teleskopierbare Zylinder-Kolbeneinheiten 17 ausgebildet sind. Jede der hydraulisch betätigbaren Zylinder-Kolbeneinheiten 17 ist derart angebracht, dass sie zwischen dem Auflieger 7 und der Zugmaschine 1 senkrecht zur Längsachse der Zugmaschine 1 in im Wesentlichen vertikaler Richtung wirkt, wobei im teleskopierten Zustand der Zylinder-Kolbeneinheiten 17 deren endseitige Auflager 22 das Chassis 10 des Aufliegers 7 beaufschlagen. Im normalen Fahrbetrieb sind die Kolben 20 der Zylinder-Kolbenein-heiten 17 in die Zylinder 21 eingeschoben, wobei die Zylinder-Kolbeneinheiten 17 eine geringe Bauhöhe aufweisen und sich nicht störend auswirken.

Wird der Hydraulikzylinder 14 bei beladener Mulde 13 ausgefahren, um diese zu entleeren, wirkt aufgrund der Gewichtsverlagerung ein Drehmoment gemäß dem Pfeil 18 im Bereich der Achsen 7 des Aufliegers 10, das über die Kupplung 8 auf die Zugmaschine 1 übertragen wird und zu einem Abheben der hinteren Antriebsachsen 4 von einem Untergrund 19 führt, wonach ein Fahren, beispielsweise zum Verteilen des zu entladenden Schüttgutes, nicht mehr möglich ist. Über eine Hydrauliksteuerung der Zugmaschine 1 werden die Distanzeinrichtungen 16 druckbeaufschlagt und die Kolben 20 fahren aus den Zylindern 21 der teleskopierbaren Zylinder-Kolbeneinheiten 17 heraus, bis die Auflager 22 an dem Chassis 10 anliegen. Ein anschließender Druckanstieg in den Zylinder-Kolbeneinheiten 17 bewirkt ein Drehmoment gemäß den dem Pfeil 23 um die heckseitige Antriebsachse 4, die demzufolge wieder Kontakt mit dem Untergrund bekommt, so dass der Sattelzug verfahren werden kann. Der Druck in den Zylinder-Kolbeneinheiten 17 lässt sich derart steigern, dass die Vorderachse 3 vom Untergrund 19 abhebt. Anschließend ist die Zugmaschine 1 zwar nicht mehr lenkbar, aber in schwierigem Gelände wirkt sich die hohe Kraftbeaufschlagung der Antriebsachsen 4 positiv aus und insbesondere auf einem abgesicherten Gelände, beispielsweise eine Baustelle, ist die Lenkbarkeit auf einer verhältnismäßig kurzen Strecke, auf der das Schüttgut abgeladen wird, nicht von großer Wichtigkeit. In einer solchen Situation kann gewährleistet werden, dass der Sattelzug gefahrlos geradeaus fahren kann.

Das Ausfahren der Zylinder-Kolbeneinheiten 17 erfolgt aufgrund von Sensorsignalen, die den Schlupf der Räder 24 der Zugmaschine 1, deren Geschwindigkeit und/oder deren Lage bzw. die Lage des Aufliegers 10, insbesondere zu der Zugmaschine 1 erfassen und an eine Steuerung zur Auswertung weiterleiten, wobei die Steuerung mit einem mit den Zylinder-Kolbeneinheiten 17 verbundenen Hydraulikaggregat gekoppelt ist.

## Patentansprüche

1. Sattelzug mit einer Zugmaschine (1) und einem Auflieger (7), die über eine Kupplung (8) miteinander verbunden sind, **dadurch gekennzeichnet, dass** an dem Heck der Zugmaschine (1) eine mittels Sensorsignalen gesteuerte Distanzeinrichtung (16) angeordnet ist, die zwischen dem Auflieger (7) und der Zugmaschine (1) in Richtung einer senkrecht zur Längsachse der Zugmaschine (1) verlaufenden Hochachse wirkt.

2. Sattelzug nach Anspruch 1, **dadurch gekennzeichnet, dass** die Distanzeinrichtung (16) teleskopierbar, insbesondere als Zylinder-Kolbeneinheit (17), ausgebildet ist.

3. Sattelzug nach Anspruch 1 oder 2, **dadurch gekennzeichnet, dass** die Distanzeinrichtung (16) hydraulisch oder pneumatisch betätigbar und an den Hydraulikkreislauf oder einen Druckluftkessel der Zugmaschine (1) angeschlossen ist.

4. Sattelzug nach einem der Ansprüche 1 bis 3, **dadurch gekennzeichnet, dass** Signale von Radsensoren und/oder Lagesensoren der Zugmaschine (1) und/oder des Aufliegers (7) verwendbar sind.

5. Sattelzug nach einem der Ansprüche 1 bis 4, **dadurch gekennzeichnet, dass** die Distanzeinrichtung (16) und die Sensoren an eine Steuerung der Zugmaschine (1) angeschlossen sind.

6. Sattelzug nach einem der Ansprüche 1 bis 5, **dadurch gekennzeichnet, dass** an einem Trägerrahmen (2) der Zugmaschine (1) zwei zueinander beabstandete Distanzeinrichtungen (16) festgelegt sind.

7. Sattelzug nach Anspruch 1, **dadurch gekennzeichnet, dass** der Auflieger (7) einen als Kipper (11) ausgebildeten Aufbau aufweist und die Distanzeinrichtung (16) zwischen dem Auflieger (7) und der Zugmaschine (1) zumindest beim heckseitigen Entladen wirkt, wenn wenigstens eine Antriebsachse (4) der Zugmaschine (1) vom Untergrund (19) abgehoben ist.

8. Sattelzug nach einem der Ansprüche 1 bis 7, **dadurch gekennzeichnet, dass** die Distanzeinrichtung (16) ab einer bestimmten Geschwindigkeit in ihre Ausgangslage, in der sie nicht zwischen der Zugmaschine (1) und dem Auflieger (7) wirksam ist, zusammenfährt.

9. Verfahren zur Belastung einer hinteren Antriebsachse einer luftgefederten Zugmaschine (1) eines Sattelzugs, die über eine Kupplung (8) mit einem als Kipper ausgestalteten Auflieger (7) verbunden ist, **dadurch gekennzeichnet, dass** Sensorsignale erfasst werden, die Luft aus der Federung der Antriebsachse abgelassen, eine Distanzeinrichtung an dem Heck der Zugmaschine (1) zwischen dem Auflieger (7) und der Zugmaschine (1) angeordnet, Luft in die Federung gepumpt und anschließend der Kipper zum Entladen betätigt wird.

10. Verfahren zur Belastung einer hinteren Antriebsachse einer Zugmaschine (1) eines Sattelzugs, die über eine Kupplung (8) mit einem als Kipper ausgestalteten Auflieger (7) verbunden ist, **dadurch gekennzeichnet, dass** vor oder während der Betätigung des Kippers zum Entladen Sensorsignale erfasst werden und eine am Heck der Zugmaschine zwischen der Zugmaschine und dem Auflieger in vertikaler Richtung wirkende Distanzeinrichtung derart druckbeaufschlagt wird, dass die Zugmaschine relativ zu dem Auflieger nach unten gedrückt wird.
